# EUROPÄISCHE PATENTSCHRIFT

(11) **EP 1 531 708 B1**
(45) Veröffentlichungstag und Bekanntmachung des Hinweises auf die Patenterteilung: **09.08.2006**
(21) Anmeldenummer: 03794965.8
(22) Anmeldetag: 28.08.2003
(51) Int. Cl.: A47J 31/44

(54) **ABGABEVORRICHTUNG FÜR GETRÄNKE**
DISPENSING DEVICE FOR DRINKS
DISPOSITIF DISTRIBUTEUR DE BOISSONS

(30) Priorität: 28.08.2002 DE 10239595
(43) Veröffentlichungstag der Anmeldung: 25.05.2005
(73) Patentinhaber: NIRO-PLAN AG, 4663 Aarburg (CH)
(72) Erfinder: GREIWE, Hansdieter, 97944 Boxberg (DE); HERRMANN, Rainer, 97922 Lauda-Königshofen (DE)
(74) Vertreter: Bohnenberger, Johannes
(86) Internationale Anmeldenummer: PCT/EP2003/009557
(87) Internationale Veröffentlichungsnummer: WO 2004/023949

(56) Entgegenhaltungen:
- DE-A- 2 048 163
- US-A- 6 082 246

## Beschreibung

Die Erfindung betrifft eine Abgabevorrichtung für Getränke oder dergleichen dosierbare fluide Lebensmittel, insbesondere für Kaffee, Milch, Softdrinks oder Suppen.

Derartige Abgabevorrichtungen, meist "Getränkeautomaten" genannt, sind nicht nur in Selbstbedienungsrestaurants oder Kantinen üblich geworden, sie werden vielmehr auch in der Gastronomie ganz allgemein verwendet um Servicepersonal einzusparen. Um eine Vielzahl von verschiedenen Getränken, nur als Beispiel seien Espresso, Cappuccino, Latte Macchiato oder auch der übliche Filterkaffee genannt, abzugeben, wird ein und dieselbe Abgabevorrichtung verwendet, deren Fülleinrichtung zum Einfüllen des Getränks in das Geschirr aus verschiedenen Quellen gespeist wird. Besonders zur Zubereitung von z. B. Cappuccino an einer Espresso-Maschine ist Handarbeit notwendig, µm eine optimale Schaumbildung und vor allem Schaumbeibehaltung zu erreichen. Bei Latte Macchiato wird sogar eine Schichtung der verschiedenen "Ingredienzien" verlangt, so daß am Boden des Geschirrs Kaffee, darüber Milch und auf dieser wiederum Schaum zu stehen kommen. Dies ist mit den herkömmlichen Abgabevorrichtungen praktisch nicht möglich.

Eine Abgabevorrichtung nach dem Oberbegriff des unabhängigen Anspruchs 1 ist aus US-A-6 082 246 bekannt.

Der Erfindung liegt die Aufgabe zugrunde, eine Abgabevorrichtung der eingangs genannten Art dahingehend aufzuzeigen, daß eine optimale Befüllung der Geschirre ermöglicht wird.

Diese Aufgabe wird durch eine Abgabevorrichtung für Getränke oder dergleichen dosierbare fluide Lebensmittel, insbesondere Kaffee, Milch, Softdrinks oder Suppen gelöst, die eine Erkennungseinrichtung zum Erkennen einer vertikalen Höhe eines Geschirrs zur Aufnahme des Lebensmittels und zum Abgeben eines Höhensignals, eine Fülleinrichtung, die in ihrer Höhe relativ zum Geschirr verstellbar angeordnet ist und eine Steuereinrichtung umfaßt, die auf das Höhensignal hin die Fülleinrichtung in eine verstellbare Füllhöhe zum Geschirr verstellt, bevor das Lebensmittel in das Geschirr gefüllt wird.

Ein wesentlicher Punkt der Erfindung liegt darin, daß mittels einer einzigen Fülleinrichtung ohne zusätzliche Handarbeit die verschiedenen Getränke in die jeweils dazugehörigen Geschirre einfüllbar sind und dabei eine optimale "Fallhöhe" für das einzufüllende Getränk einstellbar ist. Dadurch kann nicht nur verhindert werden, daß das eingefüllte Getränk die Abgabevorrichtung durch Spritzer verunreinigt, es kann auch sichergestellt werden, daß durch das "schonende" Einfüllen eine gewünschte Schichtung (Schaum auf dem Cappuccino, die beschriebene Schichtung bei Latte Macchiato) erzielt wird.

Vorzugsweise ist die Steuereinrichtung derart ausgebildet, daß die Fülleinrichtung nach Beendigung eines Füllvorgangs in eine Warteposition mit einer maximalen Höhe über dem Geschirr verstellt wird. Durch diese Höhenverstellung nach dem Füllvorgang in eine Ruheposition wird dem Benutzer "signalisiert", daß der Füllvorgang nunmehr abgeschlossen ist. Das nächste Geschirr kann nun unabhängig von seiner Höhe wieder unter die Fülleinrichtung gestellt werden.

Vorzugsweise ist die Steuereinrichtung derart ausgebildet, daß verschiedene Füllhöhen speicherbar sind. Einerseits wird also die Fülleinrichtung in eine optimale Position zum Geschirr gebracht, andererseits können auf diese Weise in ein und dasselbe Geschirr verschiedene Mengen an Flüssigkeit und somit verschiedene Füllhöhen vorgegeben werden. Hierbei werden vorzugsweise die verschiedenen Füllhöhen in Abhängigkeit von verschiedenen Lebensmitteln gespeichert, so daß in einem Glas eine größere Füllhöhe für Latte Macchiato mit daraufsitzendem Schaum zugelassen wird als für einen Milchkaffee (ohne Schaum).

Die Erkennungseinrichtung erfaßt vorzugsweise einen Füllstandssensor, über welchen ein für das Geschirr maximaler Füllstand im Geschirr beim Einfüllen des Lebensmittels einstellbar ist. Auf diese Weise kann gewährleistet werden, daß eine absichtliche Fehlbedienung durch mehrmaliges Einfüllen nicht zu einem Überlaufen des Geschirrs führt.

Die Erkennungseinrichtung erfaßt vorzugsweise einen programmierbaren Speicher, in welchem verschiedenen Erkennungssignalen entsprechende Höhensignale gespeichert sind. Auf diese Weise können Informationen über das Geschirr, welche mit der Höhe des Geschirrs primär nichts zu tun haben, dazu verwendet werden, die optimale Höheneinstellung zu finden. Beispielsweise kann das Geschirr gewogen und aus dem Gewicht des Geschirrs über gespeicherte Werte die Höheneinstellung vorgenommen werden. Es ist auch möglich, das Geschirr mit Identifikationseinrichtungen, z. B. Magnetstreifen zu versehen, wobei aus dieser Information direkt oder indirekt die Höhe des Geschirrs herleitbar ist.

Bei einer Ausführungsform der Erfindung umfaßt die Erkennungseinrichtung Sensormittel zum (direkten) Feststellen der Höhe des Geschirrs, wobei diese Sensormittel insbesondere als Lichtschranke ausgebildet sein können. In diesem Fall findet also eine direkte Höhenmessung statt.

Alternativ oder auch zusätzlich umfaßt die Erkennungseinrichtung Leseeinrichtungen zum Lesen einer auf dem Geschirr angebrachten Information, beispielsweise den oben genannten Magnetstreifen oder einen Strichcode. Derartige Anordnungen sind sehr leicht herstellbar.

Vorzugsweise ist eine Lerneinrichtung vorgesehen, die eine manuell betätigbare Einstelleinrichtung zum Verstellen der Fülleinrichtung und zum Speichern eines Höhensignals in Abhängigkeit von einem bestimmten Geschirr aufweist. Der Hersteller (oder Betreiber der Anlage) kann also in einem Lernvorgang eine optimale Füllhöhe für das bei ihm vorhandene Geschirr ausprobieren und so einspeichern, daß sich die Fülleinrichtung beim Abstellen eines gleichartigen Geschirrs durch einen Kunden selbsttätig auf die voreingestellte (erlernte) Höhe einstellt.

Vorzugsweise umfaßt die Fülleinrichtung eine feststehende Geschirraufnahme und einen verstellbaren Abgabebereich, so daß das Geschirr immer in derselben Höhe abgestellt werden kann. Der Abgabebereich ist vorzugsweise mit Lebensmittelzuliefereinrichtungen, also Vorratsgefäßen oder dem Kaffeefilter-Auslauf usw. so verbunden, daß eine Strecke, welche das Lebensmittel von der Zuliefereinrichtung bis zu einem Austritt ins Freie zurücklegt, unabhängig ist von der Höhe der Fülleinrichtung. Dadurch kann eine gleichbleibende Qualität des Produktes auch bei verschiedenen Füllhöhen gewährleistet werden.

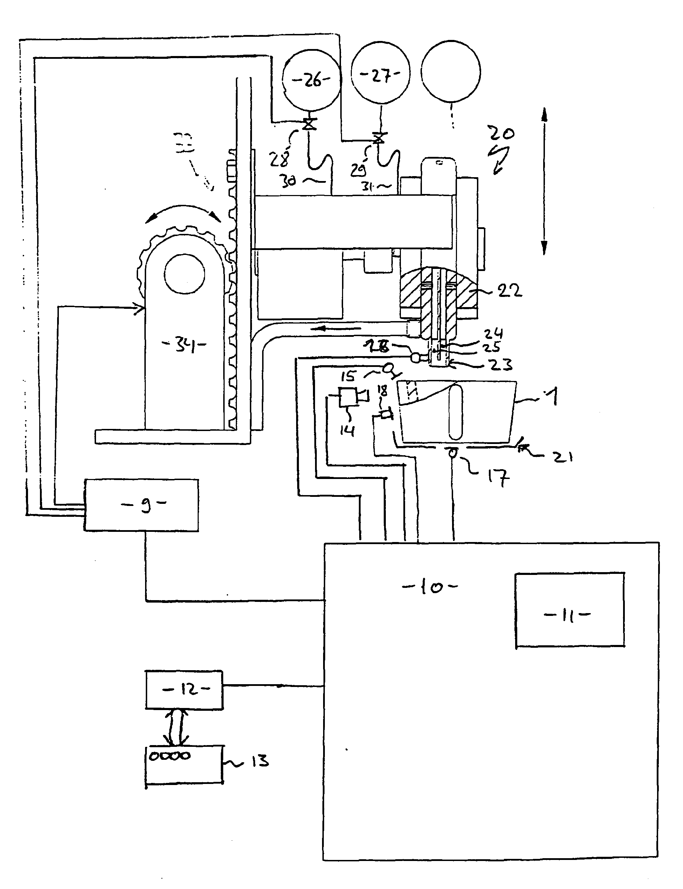

Nachfolgend wird die Erfindung anhand eines Ausführungsbeispiels näher beschrieben. Hierbei zeigt die beiliegende Abbildung eine schematisierte Abgabevorrichtung mit den dazugehörigen Sensoren und der Erkennungseinrichtung in einem Blockschaltbild.

Wie in der Abbildung dargestellt, wird ein Geschirr 1, im vorliegenden Fall eine Tasse, auf eine Geschirraufnahme 21 einer Fülleinrichtung 20 gestellt. Über der Tasse 1 befindet sich ein Auslauf 23, der eine erste Leitung 24 und eine zweite Leitung 25 umfaßt, welche sich kurz vor der Mündung des Auslaufs 23 vereinen. Der Auslauf 23 ist einem Abgabebereich 22 der Fülleinrichtung 20 zugeordnet, der über einen Zahnstangenantrieb 33 mit einem Verstellantrieb 34 nach oben und unten (siehe Doppelpfeil) auf das Geschirr 1 zu oder nach oben von ihm wegbewegt werden kann. Der Auslauf 23 bzw. die erste Leitung 24 und die zweite Leitung 25 sind über Ventile 28, 29 (und ggf. weitere Ventile) sowie eine erste Leitung 30 und eine zweite Leitung 31 (sowie ggf. weitere Leitungen) mit einer ersten Zuliefereinrichtung 26 und einer zweiten Zuliefereinrichtung 27 (sowie ggf. weiteren Zuliefereinrichtungen, wie zeichnerisch angedeutet) verbunden. Die Ventile 28, 29 werden von einer Steuereinrichtung 9 gesteuert, die ihre Befehlssignale aus einer Erkennungseinrichtung 10 erhält. Der Erkennungseinrichtung 10 werden die Ausgangssignale eines Höhensensors 14 zum Messen der Höhe des Oberrandes des Geschirrs über der Geschirraufnahme 21, eines ersten, unbeweglich montierten Füllstandssensors 15, eines zweiten, am Abgabebereich 22 fixierten zweiten Füllstandssensors 16, einer Wägeeinrichtung 17 zum Bestimmen des Gewichts des Geschirrs 1 sowie die Ausgangssignale einer Leseeinrichtung 18 zum Lesen einer auf dem Geschirr 1 angebrachten Information zugeführt. Über die Sensoren 14 bis 18 werden der Erkennungseinrichtung 10 Daten mitgeteilt, aus der die Höhe des Geschirrs und die Höhe des Flüssigkeitsspiegels im Geschirr herleitbar sind. Hierzu dienen weiterhin Daten, die in einem Speicher 11 der Erkennungseinrichtung 10 gespeichert sind, insbesondere Daten über die physikalischen Abmessungen (insbesondere die Höhe und die Art des Geschirrs). Aus diesen Daten werden in der Erkennungseinrichtung Signale hergeleitet, über welche die Steuereinrichtung 9 den Verstellantrieb 34 derart betreibt, daß der Abgabebereich 22 der Fülleinrichtung 20 so in Richtung auf das Geschirr 1 zugestellt wird, daß die Höhe zwischen der Mündung des Auslaufes 23 relativ nah über dem Oberrand des Geschirrs, ggf. sogar innerhalb des Geschirrs 1 zu stehen kommt, bevor die Ventile 28 und 29 zur Abgabe der Lebensmittel geöffnet werden. Auf diese Weise ist eine optimale und spritzerfreie Befüllung des Geschirrs 1 möglich. Prinzipiell ist es natürlich auch möglich, anstelle des Abgabebereiches 22 die Geschirraufnahme 21 in ihrer Höhe relativ zum Abgabebereich 22 auf und ab zu bewegen.

Die Steuereinrichtung 9 ist hierbei derart ausgebildet, daß bei Beendigung eines Füllvorgangs, also der Abgabe einer voreingestellten Flüssigkeitsmenge der Abgabebereich 22 durch den Verstellantrieb 34 nach oben in seine höchste Position gefahren wird, so daß der Kunde die Beendigung des Abgabevorgangs leicht erkennen kann und ein anderes Geschirr z. B. mit einer erheblich größeren Höhe zur Befüllung auf die Geschirraufnahme 21 abstellbar ist.

Es ist nun möglich, die genannten Steuervorgänge und Absenkung des Abgabebereiches 22 zum Geschirr 1 aufgrund ständiger Messungen, insbesondere durch den Höhensensor 14 vorzunehmen. Hierbei kann auch gleichzeitig ein Nachführen (Anheben) des Abgabebereiches 22 relativ zum Flüssigkeitsspiegel aufgrund der Ausgangssignale des zweiten Füllstandssensors 16 erfolgen. Eine größere Sicherheit bei diesem Steuervorgang kann aber dadurch erreicht werden, daß das Geschirr 1 "erkannt" wird und seine zuvor exakt bestimmte Höhe aus dem Speicher 11 ausgelesen und die Höheneinstellung des Abgabebereiches 22 dementsprechend gewählt wird. Diese Bestimmung kann besonders einfach durch eine Lerneinrichtung 12 mit einer Tastatur 13 bewerkstelligt werden, die derart ausgebildet ist, daß bei einer ersten Einstellung eine bestimmte Art von Geschirr 1, z. B. eine Espresso-Tasse auf der Geschirraufnahme 21 abgestellt und der Abgabebereich 22 auf die gewünschte Höhe durch manuelle Steuerung über die Tastatur 13 abgesenkt wird. Durch die Lerneinrichtung 12 werden dann die Ausgangssignale der verschiedenen Sensoren zu einer Erkennung des Geschirrs verwendet und zusammen mit der manuell eingestellten Höhe im Speicher 11 abgelegt. Wenn ein gleichartiges Geschirr 1 auf der Geschirraufnahme 21 von einem Kunden abgestellt wird, so kann die Erkennungseinrichtung 10 durch Datenvergleich das Geschirr bestimmen und die gewünschte Position des Abgabebereichs 22 über die Steuereinrichtung 9 einstellen.

### Bezugszeichenliste

- 1: Geschirr
- 9: Steuereinrichtung
- 10: Erkennungseinrichtung
- 11: Speicher
- 12: Lerneinrichtung
- 13: Tastatur
- 14: Höhensensor
- 15: 1. Füllstandssensor
- 16: 2. Füllstandssensor
- 17: Wägeeinrichtung
- 18: Leseeinrichtung
- 20: Fülleinrichtung
- 21: Geschirraufnahme
- 22: Abgabebereich
- 23: Auslauf
- 24: 1. Leitung
- 25: 2. Leitung
- 26: 1. Zuliefereinrichtung
- 27: 2. Zuliefereinrichtung
- 28: 1. Ventil
- 29: 2. Ventil
- 30: 1. Leitung
- 31: 2. Leitung
- 33: Zahnstangenantrieb
- 34: Verstellantrieb

## Patentansprüche

1. Abgabevorrichtung für Getränke oder dergleichen dosierbare fluide Lebensmittel, insbesondere Kaffee, Milch, Softdrinks oder Suppen, umfassend eine Fülleinrichtung (20), die in ihrer Höhe relativ zum Geschirr (1) verstellbar angeordnet ist **gekennzeichnet durch**
- eine Erkennungseinrichtung (10) zum Erkennen einer vertikalen Höhe eines Geschirrs (1) zur Aufnahme des Lebensmittels und zum Abgeben eines Höhensignals; und **durch**
- eine Steuereinrichtung (9), die auf das Höhensignal hin die Fülleinrichtung (20) in eine voreinstellbare Füllhöhe zum Geschirr (1) verstellt, bevor das Lebensmittel in das Geschirr (1) gefüllt wird.

2. Abgabevorrichtung nach Anspruch 1, **dadurch gekennzeichnet, daß** die Steuereinrichtung (9) derart ausgebildet ist, daß die Fülleinrichtung (20) nach Beendigung eines Füllvorgangs in eine Warteposition mit einer maximalen Höhe über dem Geschirr (1) verstellt wird.

3. Abgabevorrichtung nach einem der vorhergehenden Ansprüche, **dadurch gekennzeichnet, daß** die Steuereinrichtung (9) derart ausgebildet ist, daß verschiedene Füllhöhen speicherbar sind.

4. Abgabevorrichtung nach Anspruch 3, **dadurch gekennzeichnet, daß** die verschiedenen Füllhöhen in Abhängigkeit von verschiedenen Lebensmitteln speicherbar sind.

5. Abgabevorrichtung nach einem der vorhergehenden Ansprüche, **dadurch gekennzeichnet, daß** die Erkennungseinrichtung (10) mindestens einen Füllstandssensor (15, 16) umfaßt, über welchen ein für das Geschirr (1) maximaler Füllstand im Geschirr (1) beim Einfüllen des Lebensmittels einstellbar ist.

6. Abgabevorrichtung nach einem der vorhergehenden Ansprüche, **dadurch gekennzeichnet, daß** die Erkennungseinrichtung (10) einen programmierbaren Speicher (11) umfaßt, in welchem verschiedenen Erkennungssignalen entsprechende Höhensignale gespeichert sind.

7. Abgabevorrichtung nach einem der vorhergehenden Ansprüche, **dadurch gekennzeichnet, daß** die Erkennungseinrichtung (10) Sensormittel (14) zum Feststellen der Höhe des Geschirrs (1) umfaßt.

8. Abgabevorrichtung nach Anspruch 7, **dadurch gekennzeichnet, daß** die Sensormittel (14) als Lichtschranke ausgebildet sind.

9. Abgabevorrichtung nach einem der vorhergehenden Ansprüche, **dadurch gekennzeichnet, daß** die Erkennungseinrichtung (10) Leseeinrichtungen (18) zum Lesen einer auf dem Geschirr (1) angebrachte Information umfaßt.

10. Abgabevorrichtung nach einem der vorhergehenden Ansprüche, **gekennzeichnet durch** eine Lerneinrichtung (12) mit einer manuell betätigbaren Einstelleinrichtung (13) zum Verstellen der Fülleinrichtung (20) und zum Speichern eines Höhensignals in Abhängigkeit von einem bestimmten Geschirr (1).

11. Abgabevorrichtung nach einem der vorhergehenden Ansprüche, **dadurch gekennzeichnet, daß** die Fülleinrichtung (20) eine feststehende Geschirraufnahme (21) und einen verstellbaren Abgabebereich (22) umfaßt, welcher derart mit Lebensmittelzuliefereinrichtungen (26, 27) verbunden ist, daß eine Strecke, welche das Lebensmittel von der Zuliefereinrichtung (26, 27) bis zu einem Austritt ins Freie zurücklegt, unabhängig ist von der Höhe der Fülleinrichtung (20) über der Geschirraufnahme (21).

## Claims

1. Dispensing device for drinks or similar dosable liquid foodstuffs, in particular coffee, milk, soft drinks or soups, comprising a filling mechanism (20) the height of which is adjustable relative to the container (1),
**characterized by**
- an identification means (10) to detect a vertical height of a container (1) for receiving the foodstuff and to send out a height signal; and by
- a control means (9) that in response to the height signal adjusts the filling mechanism (20) to a presettable filling height with respect to the container (1), before the container (1) is filled with the foodstuff.

2. Dispensing device according to Claim 1, **characterized in that** the control means (9) is so designed that after a filling procedure has been completed, the filling mechanism (20) is moved into a waiting position in which its height above the container (1) is maximal.

3. Dispensing device according to one of the preceding claims,
**characterized in that** the control means (9) is so designed that various filling heights can be stored in memory.

4. Dispensing device according to Claim 3, **characterized in that** the various filling heights can be stored in association with various foodstuffs.

5. Dispensing device according to one of the preceding claims,
**characterized in that** the identification means (10) comprises at least one filling-state sensor (15, 16), by way of which to specify a maximal filling state for the container (1) when the container (1) is being filled with the foodstuff.

6. Dispensing device according to one of the preceding claims,
**characterized in that** the identification means (10) comprises a programmable memory (11) in which height signals corresponding to various identification signals are stored.

7. Dispensing device according to one of the preceding claims,
**characterized in that** the identification means (10) comprises sensors (14) to detect the height of the container (1).

8. Dispensing device according to Claim 7, **characterized in that** the sensors (14) are constructed as light barriers.

9. Dispensing device according to one of the preceding claims,
**characterized in that** the identification means (10) comprises reading means (18) to read information provided on the container (1).

10. Dispensing device according to one of the preceding claims,
**characterized by** a learning means (12) with a manually actuatable adjustment means (13) to adjust the position of the filling mechanism (20) and to store a height signal associated with a particular container (1).

11. Dispensing device according to one of the preceding claims,
**characterized in that** the filling mechanism (20) comprises a container receptacle (21) that is fixed in position and a movable dispensing region (22) that is connected to foodstuff-supply means (26, 27) in such a way that a distance over which the foodstuff must pass on the way from the supply means (26, 27) to the outlet into the open air is independent of the height of the filling mechanism (20) above the container receptacle (21).

## Revendications

1. Distributeur de boissons ou de produits alimentaires fluides dosables similaires, en particulier café, lait, boissons non alcoolisées ou soupes, comprenant un dispositif de remplissage (20) dont la hauteur est réglable par rapport au récipient, **caractérisé par**
- un dispositif de reconnaissance (10) pour reconnaître une hauteur verticale d'un récipient (1) destiné à recevoir le produit alimentaire et pour délivrer un signal de hauteur ; et par
- un dispositif de commande (9) qui, à la suite du signal de hauteur, déplace le dispositif de remplissage (20) à une hauteur de remplissage préréglable par rapport au récipient (1), avant que le produit alimentaire ne soit versé dans le récipient (1).

2. Distributeur selon la revendication 1, **caractérisé en ce que** le dispositif de commande (9) est conçu de manière que le dispositif de remplissage (20) soit déplacé, à l'achèvement d'une opération de remplissage, dans une position d'attente avec une hauteur maximale au-dessus du récipient (1).

3. Distributeur selon l'une des revendicationss précédentes, **caractérisé en ce que** le dispositif de commande (9) est conçu de manière que différentes hauteurs de remplissage puissent être mémorisées.

4. Distributeur selon la revendication 3, **caractérisé en ce que** les différentes hauteurs de remplissage peuvent être mémorisées en fonction de différents produits alimentaires.

5. Distributeur selon l'une des revendications précédentes, **caractérisé en ce que** le dispositif de reconnaissance (10) comprend au moins un capteur de niveau (15, 16) par lequel un niveau maximal du récipient (1) peut être réglé dans le récipient (1) lors de l'introduction du produit alimentaire.

6. Distributeur selon l'une des revendication précédentes, **caractérisé en ce que** le dispositif de reconnaissance (10) comprend une mémoire programmable (11) dans laquelle sont mémorisés différents signaux de hauteur correspondant à différents signaux de reconnaissance.

7. Distributeur selon l'une des revendications précédentes, **caractérisé en ce que** le dispositif de reconnaissance (10) comprend des moyens de détection (14) pour détecter la hauteur du récipient (1).

8. Distributeur selon la revendication 7, **caractérisé en ce que** les moyens de détection (14) sont réalisés sous la forme d'une barrière lumineuse.

9. Distributeur selon l'une des revendications précédentes, **caractérisé en ce que** le dispositif de reconnaissance (10) comprend des dispositifs de lecture (18) pour lire une information placée sur le récipient (1).

10. Distributeur selon l'une des revendications précédentes, **caractérisé par** un dispositif d'apprentissage (12) avec un dispositif de réglage (13) à actionnement manuel pour déplacer le dispositif de remplissage (20) et pour mémoriser un signal de hauteur en fonction d'un récipient (1) déterminé.

11. Distributeur selon l'une des revendications précédentes, **caractérisé en ce que** le dispositif de remplissage (20) comprend un logement de récipient (21) fixe et une zone de distribution (22) réglable qui est reliée à des dispositifs d'amenée de produit alimentaire (26, 27) de manière qu'une distance, que le produit alimentaire franchit depuis le dispositif d'amenée (26, 27) jusqu'à une sortie à l'extérieur, soit indépendante de la hauteur du dispositif de remplissage (20) au-dessus du logement de récipient (21).
